# EUROPÄISCHE PATENTANMELDUNG

(11) **EP 0 894 451 A1**
(43) Veröffentlichungstag der Anmeldung: **03.02.1999**
(21) Anmeldenummer: 98111774.0
(22) Anmeldetag: 25.06.1998
(51) Int. Cl.: A45D 29/05, A45D 29/14, A61C 3/00, A61B 17/54, B25F 5/00, B23B 45/00

(54) **Rotationsbehandlungsgerät für Körperpflege**

(30) Priorität: 04.07.1997 DE 19728712
(71) Anmelder: Kutzner + Weber GmbH & Co. KG, 82216 Maisach (DE)
(72) Erfinder: Siersch, Werner, 82319 Starnberg (DE)
(74) Vertreter: Weickmann, Heinrich, Dipl.-Ing.

(57) **Zusammenfassung**

Bei einem Rotationsbehandlungsgerät zur Körperpflege, umfassend eine elektromotorische Antriebseinheit mit einer Ausgangswelle (16) und einer an dieser Ausgangswelle (16) angeordneten Kupplungsbaugruppe (18) zum Ankuppeln eines Behandlungskopfes mit einem im wesentlichen zylindrischen Ankupplungsschaft (22), wird vorgeschlagen, daß die Kupplungsbaugruppe (18) Primärkupplungsmittel (24) umfaßt, wobei diese Primärkupplungsmittel (24) dazu bestimmt und geeignet sind, eine unbeabsichtigte Trennung des Behandlungskopfes von der Ausgangswelle (16) zu verhindern, und daß die Kupplungsbaugruppe (18) ferner Sekundärkupplungsmittel (26) umfaßt, welche bei Anlegen eines Bremsmoments an den Behandlungskopf einen Drehmomentschluß zwischen der Ausgangswelle (16) und dem Ankupplungsschaft (22) des Behandlungskopfes herstellen oder verstärken.

## Beschreibung

Die Erfindung betrifft ein Rotationsbehandlungsgerät für Körperpflege, umfassend eine elektromotorische Antriebseinheit mit einer Ausgangswelle und einer an dieser Ausgangswelle angeordneten Kupplungsbaugruppe zum Ankuppeln eines Behandlungskopfes mit einem im wesentlichen zylindrischen Ankupplungsschaft.

Rotationsbehandlungsgeräte werden beispielsweise in der Fußpflege oder in der Fingernagelpflege eingesetzt. Sie werden mit den verschiedensten Behandlungsköpfen bestückt, wobei unter Behandlungsköpfen im folgenden jeweils die Gesamtheit, bestehend aus dem aktiven Behandlungsteil und dem Schaft, verstanden wird, der mit der elektrischen Antriebseinheit verbunden wird. Weiterhin können solche elektromotorischen Behandlungsgeräte auch zum Antrieb von Massagebürsten verwendet werden. Anwendungsbeispiele sind aus einem Prospekt "Promed - der Traum aller Füße" bekannt.

Zum Ankuppeln der Behandlungsköpfe an die elektromotorische Antriebseinheit sind verschiedene Kupplungssysteme bekannt. So ist in dem oben zitierten Prospekt auf Seite 13 ein Batteriegerät beschrieben, bei dem die Schäfle Zylinderschäfte sind, welche reibschlüssig in Schaftaufnahmekanäle an der jeweiligen Ausgangswelle der elektromotorischen Einheit eingeschoben werden. Sie sind dort reibschlüssig gehalten. Durch den Reibschluß wird auch das übertragbare Dehmoment vorgegeben. Der Reibschluß darf einerseits nicht zu straff sein, um das Ein- und Ausschieben der Schäfte in den Schaftaufnahmekanal nicht zu schwergängig zu machen, andererseits muß auch im Hinblick auf die Übertragung des am Elektromotor verfügbaren vollen Drehmoments für einen kräftigen Drehmomentschluß gesorgt werden.

Man muß Kompromisse eingehen, kann aber das Problem auch durch Kompromisse letztlich nicht lösen.

Weiterhin ist aus dem oben zitierten Prospekt eine Lösung bekannt, bei welcher die Ausgangswelle polygonalen Querschnitt besitzt. Bei diesem Gerätetyp sind die Behandlungsköpfe jeweils mit einem eigenen Halsteil bleibend verbunden. Die Schäfte der Behandlungsköpfe sind in diesem Halsteil drehbar und im wesentlichen unverschiebbar gelagert. Wenn der jeweilige Behandlungsschaft mit einem der Polygonwelle entsprechenden Schaftkanal an die Polygonwelle angenähert wird, so gelangt ein Außengewinde des Halsteils in die Nähe eines das Ende der Polygonwelle umschließenden Innengewindes und der Schafthals kann dann mit dem Gehäuse der elektromotorischen Antriebseinheit verschraubt werden, so daß ein bleibender Eingriff zwischen der Polygonwelle und dem polygonalen Schaftkanal gesichert bleibt. Diese Ausführungsform ist relativ aufwendig insofern, als sie die Spezialbehandlungsköpfe mit angebautem Halsteil und die Gewindeausbildung in dem Gehäuse der elektromotorischen Antriebseinheit erfordert. Um auf dem Markt verbreitete Behandlungsköpfe mit einer Gestalt und Dimensionierung ähnlich oder entsprechend den rein zylindrischen Schaftformen dentalmedizinischer Behandlungsköpfe bei diesem Gerätetyp einsetzen zu können, ist ein Adapter vorgesehen. Dieser Adapter ist ähnlich den vorstehend beschriebenen Behandlungsköpfen mit auf dem Schaft axial drehbar gelagertem, aber axial nicht verschiebbarem Halsteil ausgebildet. Anstelle des Behandlungskopfes ist aber nun ein Spannfutter getreten ähnlich den Spannfuttern von Heimwerker-Bohrmaschinen. Mit diesem Spannfutter können die Schäfte von Behandlungsköpfen des dentalmedizinischen Bereichs eingesetzt werden. Nachteilig ist auch hier der erhebliche Herstellungsaufwand. Weiterhin ist nachteilig, daß durch die Integration des Halsstücks und des Spannfutters eine erhebliche Ausladung über das Gehäuse der elektromotorischen Antriebseinheit hinaus entsteht. Man ist nämlich bestrebt, die Geräte so zu gestalten, daß sie möglichst nahe dem aktiven Behandlungsteil erfaßt werden können, um sichere Behandlungsbewegungen an der jeweiligen Behandlungsstelle des Körpers ausführen zu können. Man kann zwar noch den Halsteil mit den Fingern umfassen, wenn er mitdem Gehäuse der elektromotorischen Antriebseinheit verschraubt ist, man kann aber das Spannfutter nicht erfassen, da es insgesamt rotiert, so daß der Abstand des aktiven Behandlungsteils von der vordersten Erfassungsstelle am Halsteil jedenfalls um die axiale Länge des Spannfutters verlängert ist.

Es sind schließlich auch Lösungen bekannt geworden, bei denen am antriebsseitigen Ende des Ankupplungsschafts ein Polygon angeschliffen ist, dieses Polygon in einen polygonförmigen Aufnahmeraum am Ende der Ausgangswelle eingesetzt wird und das unbeabsichtige Lösen des Schafts vom Gerät durch eine Magnethalterung verhindert wird. Diese Ausführungsform hat den erheblichen Nachteil, daß die Ausgangswelle eine Spezialform erhält, so daß die auf dem Markt verbreiteten Behandlungsköpfe, insbesondere diejenigen aus dem dentalmedizinischen Bereich, nicht ohne weiteres eingesetzt werden können.

Der Erfindung liegt demnach die Aufgabe zugrunde, ein elektromotorisches Behandlungsgerät für die Körperpflege so auszugestalten, daß es mit Behandlungsköpfen einfacher zylindrischer und ggf. genormter Schaftform bestückt werden kann, die Bestückung in einfachster Weise vorgenommen werden kann, also keine großen Einschraub- und Auszugsschäfte aufgebracht werden müssen, und daß dennoch zwischen dem Schaft des jeweiligen Behandlungskopfes und der Ausgangswelle der Antriebseinheit ein Drehmoment übertragen werden kann, welches größer ist als das von der Antriebseinheit maximal aufbringbare Antriebsmoment.

Zur Lösung dieser Aufgabe wird erfindungsgemäß vorgeschlagen, daß die Kupplungsbaugruppe Primärkupplungsmittel umfaßt, diese Primärkupplungsmittel dazu bestimmt und geeignet, eine unbeabsichtigte Trennung des Behandlungskopfes von der Ausgangswelle zu verhindern, und daß die Kupplungsbaugruppe ferner Sekundärkupplungsmittel umfaßt, welche bei Anlegen eines Bremsmoments an den Behandlungskopf einen Drehmomentschluß zwischen der Ausgangswelle und dem Ankupplungsschaft des Behandlungskopfes herstellen oder verstärken.

Eine wichtige Weiterentwicklung besteht darin, daß die Sekundärkupplungsmittel derart ausgebildet sind, daß der bei Anlegen eines Bremsmoments eintretende Drehmomentschluß im wesentlichen selbsthemmungsfrei ist.

Die Erfüllung dieses Merkmals erleichtert das Abnehmen eines Behandlungskopfes von dem Gerät, weil nach Stillstand des Geräts nur die relativ geringe Haltekraft überwunden werden muß, welche von den Primärkupplungsmitteln aufgebracht wird. Es ist nicht unbedingt erforderlich, eine vollständige Selbsthemmungsfreiheit zu gewährleisten. Es ist kein Unglück, wenn der Benutzer, falls er beim Abziehen eines Behandlungskopfes größeren Widerstand verspürt, durch Hin- und Herdrehen des jeweiligen Aktivteils zwischen zwei Fingern eine Lockerungsbewegung ausführen muß. Dieses Hin- und Herdrehen zwischen zwei Fingern führt dann, wenn eine gewisse Selbsthemmung eingetreten sein sollte, auf einfache Weise zu einer Beseitigung dieser Selbsthemmung, so daß dann dem Schaftausziehen wieder nur die Haltekraft der Primärkupplungsmittel entgegenwirkt.

Von wesentlicher Bedeutung ist es, daß ein Gehäuseteil der elektromotorischen Antriebseinheit in Achsrichtung der Ausgangswelle zumindest über einen größeren Teil der axialen Erstreckung der Kupplungsbaugruppe hinweg bis nahe an die Verbindungsstelle zwischen dem behandlungsaktiven Teil des Behandlungskopfes und dem Ankupplungsschaft des Behandlungskopfes vorgezogen ist. Die Einhaltung dieser Konstruktionsvorschrift wird möglich, weil zum Lösen eines Behandlungskopfes keine händischen Maßnahmen, etwa ein Relativverdrehen von zwei Bestandteilen eines Spannfutters, notwendig sind. Wenn - und nur dann, wenn - eine einfache Ausziehbewegung zum Abnehmen des Behandlungskopfes von der elektromotorischen Antriebseinheit genügt, kann das Gehäuse im Extremfall bis unmittelbar an das antriebsseitige Ende des maximal angenäherten aktiven Behandlungsteils vorgezogen werden, wie dies im Hinblick auf eine exakte Führung des aktiven Behandlungsteils gegenüber der zu behandelnden Stelle notwendig ist.

Bei der erfindungsgemäßen Lösung ist es möglich, eine starre Lagerung des Behandlungskopfes zu erhalten, etwa dadurch, daß im Bereich der Kupplungsbaugruppe ein Lager, insbesondere ein Kugellager, zur Abstützung an dem weiter vorgezogenen Gehäuseteil vorgesehen wird.

Beim Aufbau der Primärkupplungsmittel kann man grundsätzlich auch auf Magnet- und andere Lösungen zurückgreifen. Als bevorzugte Lösung wird jedoch vorgeschlagen, daß die Primärkupplungsmittel eine ständige reibschlüssige Verbindung zwischen der Ausgangswelle und dem Ankupplungsschaft herstellen. Da der Reibschluß der Primärkupplungsmittel nicht oder jedenfalls nicht allein für die Drehmomentübertragung im Betrieb verantwortlich ist, genügt es, wenn der Reibschluß gerade ausreicht, um eine ausreichende Verlustsicherung zu bewirken. Dann ist die Axialwirkung dieses Reibschlusses so gering, daß ein einfaches Einstecken und Ausziehen nach wie vor möglich ist.

Als Faustregel kann jedenfalls gelten, daß das durch die Primärkupplungsmittel zwischen dem Ankupplungsschaft und der Ausgangswelle übertragbare Drehmoment kleiner ist als das von der elektromotorischen Antriebseinheit bei Abbremsung der Ausgangswelle auf Stillstand abgegebene Antriebsmoment.

Die Sekundärkupplungsmittel können in der Weise aufgebaut sein, daß sie Klemmkörper zwischen der Außenumfangsfläche des Ankupplungsschafts und einer den Ankupplungsschaft umschließenden, mit der Ausgangswelle drehfest verbundenen Klemmkörperstützfläche umfassen, wobei diese Klemmkörper durch Relativverdrehung zwischen dem Ankupplungsschaft und der Klemmkörperstützfläche von mindestens einem Kupplungszustand in einen Entkupplungszustand umstellbar sind.

Um sicherzustellen, daß die Klemmkörper beim Abbremsen des Behandlungskopfes, etwa durch Anlegen des rotierenden Behandlungskopfes an einen verhornten Körperbereich, zum Klemmen kommen, kann vorgesehen sein, daß die Klemmkörper in reibschlüssiger Drehmitnahmeverbindung mit dem Ankupplungsschaft stehen. Diese reibschlüssige Drehmitnahmeverbindung erfordert aber nicht unbedingt zusätzliche Komponenten. Ein funktionstüchtiges Gerät würde sich auch dann ergeben, wenn man sich auf eine beim Einstecken des Ankupplungsschafts eintretende Verspannung der Klemmkörper zwischen dem Ankupplungsschaft und der Klemmkörperstützfläche verläßt.

Weiterhin kann die Klemmung der Klemmkörper auch dadurch hervorgerufen werden, daß beim Anlauf des Geräts der mit der Welle umlaufende, die Klemmkörperstützfläche tragende Kupplungsteil den Klemmkörpern aufgrund von deren Trägheit vorausläuft.

Wenn die Primärkupplungsmittel ohnehin als reibschlüssige Kupplungsmittel ausgebildet sind, so ist es möglich, daß die reibschlüssige Drehmitnahmeverbindung zwischen den Klemmkörpern und dem Ankupplungsschaft von einem Teil der Primärkupplungsmittel gebildet ist.

Zur Herstellung der reibschlüssigen Drehmitnahmeverbindung kann beispielsweise ein O-Ring verwendet werden, welcher auf den Durchmesser des Ankupplungsschafts abgestimmt ist.

Um die Ordnung der Klemmkörper insbesondere auch dann aufrecht zu erhalten, wenn der Ankupplungsschaft nicht eingesteckt ist, wird empfohlen, daß die Klemmkörper an einem Klemmkörperträger angeordnet sind.

Dieser Gedanke kann in der Weise ausgestaltet werden, daß der Klemmkörperträger in einem mitder Ausgangswelle drehfest verbundenen Basisteil der Kupplungsbaugruppe drehbeweglich angeordnet ist, an welchem die den Ankupplungsschaft umschließende Klemmkörperstützfläche angeordnet ist, und daß durch je einen Zentralkanal des Basisteils und des Klemmkörperträgers ein Aufnahmekanal für den Ankupplungsschaft gebildet ist.

Die Primärkupplungsmittel können dann, wenn der Klemmkörperträger in axialer Richtung an dem Basisteil festgelegt ist, an dem Klemmkörperträger gelagert sein, beispielsweise mit Hilfe eines O-Rings; die Primärkupplungsmittel können dabei auch denjenigen Reibschluß bewirken, der hilfreich ist, um die Klemmkörper rasch und zuverlässig zum Klemmen zu bringen, wenn ein Bremsmoment an den Behandlungskopf angelegt wird.

Der Klemmkörperträger kann in verschiedener Weise und in Anpassung an die jeweilige Form der Klemmkörper ausgebildet werden. So ist es z.B. möglich, daß die Klemmkörper in Taschen eines käfigartig ausgebildeten Klemmkörperträgers aufgenommen sind und an Klemmbahnen der Klemmkörperstützfläche anliegen, welche einen vom Kreisverlauf abweichenden Umfangsverlauf, im folgenden genannt: Klemmsteigung, besitzen. Die Klemmkörper können dabei als Kugeln oder vorzugsweise als Zylinderrollen ausgebildet werden. Kugeln hätten zwar den Vorteil, daß sie ein besonders glattes und widerstandsfreies Einführen der Ankupplungsschäfte erlauben, haben andererseits aber den Nachteil zu großer Flächenpressung insbesondere dann, wenn die Klemmkörperstützfläche an einem Kunststoffteil ausgebildet ist. Zylinderrollen haben den Vorteil geringerer Flächenpressung. Die leichte Einführbarkeit der Ankupplungsschäfte über das Ende der Rollen hinweg kann dadurch sichergestellt werden, daß die Rollen an ihren beim Einführen des Ankupplungsschafts zuerst angetroffenen Enden konisch angefast sind.

Es ist auch eine Ausführungsform denkbar dergestalt, daß die Klemmkörper auf dem Klemmkörperträger um zur Achse der Ausgangswelle parallele Schwenkachsen schwenkbar gelagert sind, mit radial inneren Klemmschuhen zur Anlage an dem Ankupplungsschaft angeordnet sind und mit radial äußeren Steuerarmen in Steuerausnehmungen der Klemmkörperstützfläche eingreifen.

Das erfindungsgemäße Gerät soll so leicht wie möglich ausgeführt werden, um eine sichere und exakte Führung gegenüber der zu behandelnden Körperstelle zu ermöglichen. Aus diesem Grunde wird vorgeschlagen, daß mindestens ein Teil der Komponenten der Kupplungsbaugruppe aus Kunststoff gegossen oder vorzugsweise gespritzt sind. Bevorzugt geht man so weit, daß mit Ausnahme der vorzugsweise aus Stahl gefertigten Klemmkörper sämtliche Teile der Kupplungsbaugruppe aus Kunststoff geformt, insbesondere gespritzt oder gegossen, sind.

Auch im Hinblick auf leichte gußtechnische und spritzgußtechnische Herstellung ohne Hinterschneidungen und ohne die Notwendigkeit von Formschiebern wird empfohlen, daß die Kupplungsbaugruppe aus zwei Basisteilen zusammengesetzt ist, welche in einer zur Achse der Ausgangswelle im wesentlichen orthogonalen Trennebene zusammenstoßen und miteinander verbunden sind, und daß im Bereich dieser Trennebene in mindestens einem der Basisteile Ausnehmungen für die Aufnahme der Primärkupplungsmittel und der Sekundärkupplungsmittel vorgesehen sind, welche durch den jeweils anderen der beiden Basisteile verschlossen sind. Dabei ist es aus Stabilitätsgründen vorteilhaft, wenn die Primärkupplungsmittel und Sekundärkupplungsmittel in dem der elektromotorischen Antriebseinheit axial näheren Basisteil angeordnet sind. Die Querabstützung des Ankupplungsschafts kann dabei dadurch besonders biegesteif gestaltet werden, daß in beiden Basisteilen miteinander fluchtende Zentralkanäle für die Führung des Ankupplungsschafts ausgebildet sind.

Da die Schäfte der verschiedenen, zum Bestücken des erfindungsgemäßen Geräts geeigneten Behandlungsköpfe teilweise sehrunterschiedliche Längen haben und da andererseits je nach Art der Behandlung mehr oder minder große Abstände des aktiven Behandlungsteils von dem zugehörigen Gehäuseende gewünscht werden, ist es vorteilhaft, wenn die Ankupplungsschäfte in beliebiger axialer Lage an der Kupplungsbaugruppe festgestellt werden können, ohne Rücksicht darauf, ob sie mit ihrem inneren Ende gegen einen Anschlag anliegen oder nicht. Es wird deshalb weiter vorgeschlagen, daß die Primärkupplungsmittel oder/und die Sekundärkupplungsmittel zur Aufbringung einer axialen Stützkraft für den Ankupplungsschaft ausgebildet sind, welche eine formschlüssige Axialabstützung des Ankupplungsschafts verzichtbar macht. Ein Maximum an Positionsvariationen sämtlicher verfügbaren handelsüblichen Behandlungsköpfe läßt sich dann erreichen, wenn die Kupplungsbaugruppe derart bemessen ist, daß Behandlungsköpfe maximaler Schaftlänge mit ihrem jeweiligen behandlungsaktiven Teil bis an das der Antriebseinheit ferne Ende der Kupplungsbaugruppe eingesetzt werden können.

Insbesondere im Hinblick auf die Handhabung durch Rechtshänder als auch Linkshänder ist es erwünscht, das erfindungsgemäße Gerät sowohl mit Rechtslauf als auch mit Linkslauf betreiben zu können. Dem müssen natürlich die Kupplungen angepaßt werden, wie sich aus der Beispielsbeschreibung ergeben wird.

Bei einer bevorzugten Ausführungsform der Erfindung ist vorgesehen, daß der Klemmkörperträger in reibschlüssiger Drehmitnahmeverbindung mit dem Ankupplungsschaft steht. Bei dieser Ausführungsform ist gewährleistet, daß bei Abbremsen des Behandlungskopfes der Klemmkörperträger mitabgebremst wird, damit die Klemmkörper, deren Umfangsposition an die des Klemmkörperträgers gebunden ist, ebenfalls abgebremst werden, demzufolge eine Relativverdrehung zwischen den Klemmkörpern und der Klemmkörperstützfläche eintritt und demzufolge die Klemmkörper geklemmt werden. Dies gilt sowohl dann, wenn die Klemmfläche mit Klemmbahnen ausgeführt ist als auch dann, wenn die Klemmfläche mit Steuerausnehmungen für die Klemmkörper versehen ist.

Der Reibschluß zwischen dem Klemmkörperträger und dem Ankupplungsschaft kann dadurch bereitgestellt werden, daß an dem Klemmkörperträger reibschlüssige Drehmitnahmemittel befestigt oder angeformt sind, welche sich bei Einführen des Ankupplungsschafts in das Rotationsbehandlungsgerät an den Ankupplungsschaft anlegen. Alternativ kann der Reibschluß zwischen dem Klemmkörperträger und dem Ankupplungsschaft auch dadurch erzeugt werden, daß an dem Klemmkörperträger Aufnahmemittel für Drehmitnahmemittel, insbesondere ringförmige Drehmitnahmemittel wie O-Ringe, Toleranzringe oder dergleichen vorgesehen sind, welche sich bei Einführen des Ankupplungsschafts an diesen anlegen.

Bevorzugt wird der Reibschluß zwischen dem Klemmkörperträger und dem Ankupplungsschaft durch weichelastische Mittel hergestellt, die vor dem Einführen des Ankupplungsschafts in den Aufnahmeraum des Ankupplungsschafts hineinragen, beim Einführen des Ankupplungsschafts nach radial außen zurückgedrängt werden und nach Einführen des Ankupplungsschafts in elastischer Andrückberührung mit dem Ankupplungsschaft bleiben. Diese Ausführungsform erlaubt es, auch bei nur annähernder Anpassung des Ankupplungsschafts an die Maße der Kupplungsbaugruppe und bei erheblichen Maßschwankungen der Teile der Kupplungsbaugruppe ein sicheres Greifen der Sekundärkupplung zu gewährleisten. Eine besonders bevorzugte Ausführungsform sieht als Mittel zur Herstellung des Reibschlusses zwischen dem Klemmkörperträger und dem Ankupplungsschaft einen O-Ring vor, der so bemessen ist, daß er unabhängig von Maßschwankungen beim Einführen des Ankupplungsschafts in radialer Richtung komprimiert wird. Solche O-Ringe stehen als handelsübliche Teile zur Verfügung und verbilligen die Herstellung des Rotationsbehandlungsgeräts einmal durch ihre preisgünstige Verfügbarkeit und zum anderen dadurch, daß sie die Zulassung von Maßschwankungen an den Teilen der Kupplungsbaugruppe einerseits und an dem Ankupplungsschaft andererseits erlauben.

Der Größe des übertragbaren Drehmoments kommt erhebliche Bedeutung zu. Stellt sich heraus, daß bei Kombination bestimmter Bauteile und Oberflächenbehandlungen dieser Bauteile das übertragbare Drehmoment nicht ausreicht, so kann man eine Erhöhung des übertragbaren Drehmoments dadurch erreichen, daß die Klemmkörper an ihren Anlageflächen zur Anlage an dem Ankupplungsschaft und/oder an der Klemmkörperstützfläche und/oder die Außenumfangsfläche des Ankupplungsschafts und/oder die Klemmkörperstützfläche derart gerauht sind, daß eine Erhöhung des durch die Sekundärkupplungsmittel übertragbaren Drehmoments eintritt.

Eine andere Forderung geht dahin, daß auch bei großer Drehmomentübertragbarkeit das Lösen des Ankupplungsschafts leicht möglich ist. Je größer die Drehmomentübertragbarkeit ist, desto unwahrscheinlicher wird es, daß bei Aufhören der Drehmomentübertragung zwangsläufig eine Lösung der Klemmkörper aus dem Eingriff mit dem Ankupplungsschaft und der Klemmkörperstützfläche eintritt. Dann kan man den Behandlungskopf nach Stillstand des Rotationsantriebs nicht einfach abziehen. Es ist aber in jedem Fall dafür zu sorgen, daß die Sekundärkupplungsmittel derart ausgebildet sind, daß nach Eintritt einer Klemmung, soweit sich diese Klemmung bei Aufhören einer Drehmomentübertragung nicht von selber löst, diese Klemmung jedenfalls dadurch lösbar ist, daß an den Behandlungskopf von Hand ein beschleunigendes Drehmoment ggf. mehrfach und mit wechselnder Drehrichtung angelegt wird.

Da die in der dentalmedizinischen Technik verfügbaren Bohrer und dergleichen häufig auch in der allgemeinen Körperpflege eingesetzt werden können, wird empfohlen, daß die Kupplungsbaugruppe zur Aufnahme von Ankupplungsschäften ausgebildet ist, welche den Normen der dentalmedizinischen Technik entsprechen.

Die Kupplungsbaugruppe stellt auch an sich ein wertvolles Maschinenelement dank ihres einfachen und leicht zu handhabenden Aufbaus dar. Dieses Maschinenelement ist nicht nur bei Körperpflegegeräten, sondern auch bei anderen Geräten, insbesondere solchen geringer Leistung von erheblicher Bedeutung. Beispielsweise könnte man dieses Maschinenelement auch bei Handstücken zur Anwendung bringen, wie sie zum Einschleifen von Dekors in Glas benutzt werden.

Die beiliegenden Figuren erläutern die Erfindung anhand von Ausführungsbeispielen; es stellen dar:
- Fig. 1: eine teilweise geschnittene Seitenansicht eines kosmetischen Schleifgeräts mit aufgestecktem Behandlungskopf;
- Fig. 2: eine vergrößerte Ansicht der Kupplungsbaugruppe von Fig. 1 im Schnitt;
- Fig. 3: einen Schnitt nach Linie III-III der Fig. 2;
- Fig. 4: eine vergrößerte Ansicht eines Klemmkörperträgers von Fig. 2;
- Fig. 5: eine Ansicht gemäß V des in Fig. 4 gezeigten Klemmkörperträgers;
- Fig. 6: eine weitere Ausführungsform der Kupplungsbaugruppe in einer Ansicht gemäß Fig. 2 unter Weglassung des antriebsfernen Basisteils;
- Fig. 7: eine weitere Ausführungsform eines antriebsnahen Basisteils;
- Fig. 8: eine weitere Ausführungsform der Kupplungsbaugruppe in einer Ansicht gemäß Fig. 3; und
- Fig. 9: einen Schnitt nach IX-IX der Fig. 8 unter Weglassung der linken Schnitthälfte.

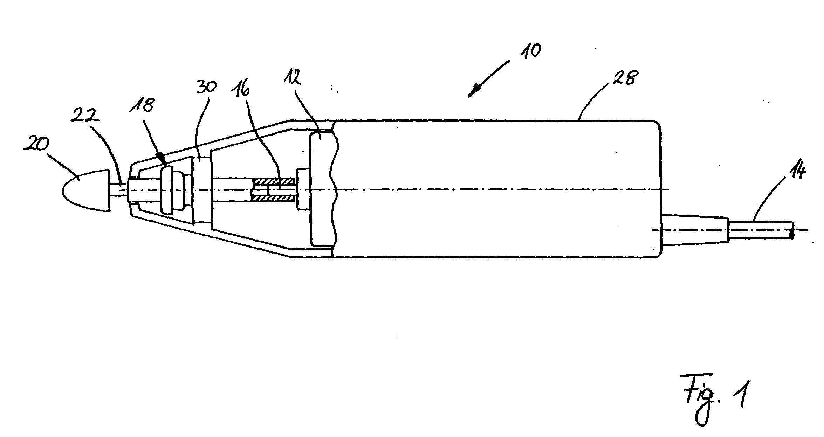

In Fig. 1 ist ein kosmetisches Schleifgerät dargestellt, das allgemein mit 10 bezeichnet ist. Dieses kosmetische Schleifgerät 10 besteht im wesentlichen aus einer elektromotorischen Antriebseinheit 12, welche über ein Stromkabel 14 mit elektrischer Energie versorgt wird und einen nicht dargestellten Drehzahlregler zum Einstellen einer gewünschten Drehzahl umfaßt. Alternativ zu dem Stromkabel 14 kann die elektromotorische Antriebseinheit 12 auch über Batterien oder Akkulumatoren angetrieben werden, wobei dann in dem kosmetischen Schleifgerät 10 eine Aufnahmeeinheit für die benötigten Batterien bzw. Akkulumatoren vorgesehen ist.

Die elektromotorische Antriebseinheit 12 umfaßt eine Ausgangswelle 16, welche durch geeignete Mittel, wie z. B. Verkleben, Verklemmen usw., mit einer Kupplungsbaugruppe 18 zum Ankuppeln eines Behandlungskopfes 20 mit einem im wesentlichen zylindrischen Ankupplungsschaft 22 drehstarr verbunden ist.

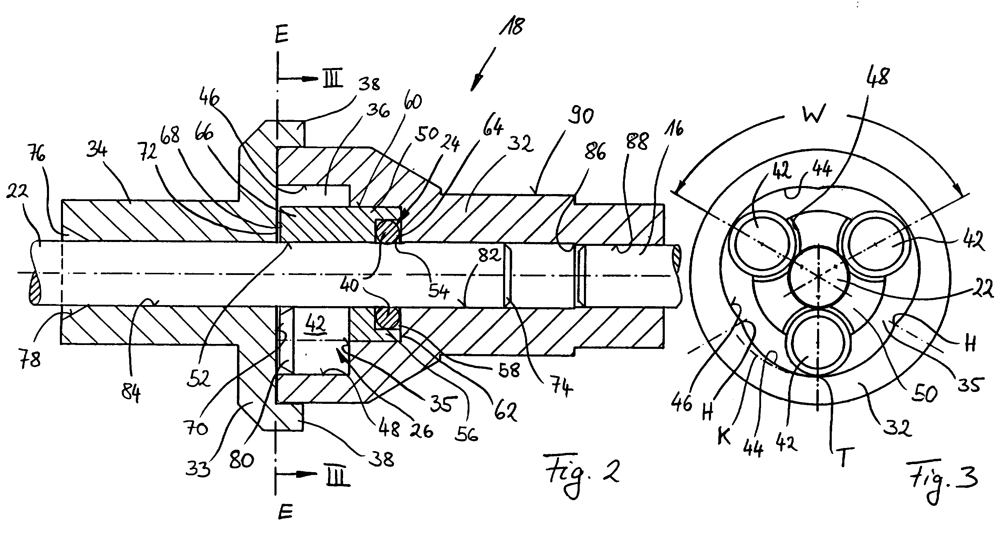

Wie man in Fig. 2 sieht, umfaßt die Kupplungsbaugruppe 18 Primärkupplungsmittel 24 in Form eines O-Rings 40, wobei dieses Primärkupplungsmittel 24 dazu bestimmt und geeignet ist, eine unbeabsichtigte Trennung des Behandlungskopfes 20 von der Ausgangswelle 16 der elektromotorischen Antriebseinheit 12 zu verhindern. Zusätzlich zu den Primärkupplungsmitteln 24 umfaßt die Kupplungsbaugruppe 18 Sekundärkupplungsmittel 26, welche beim Anlegen eines Bremsmoments am Behandlungskopf 20 einen Drehmomentschlußzwischen der Ausgangswelle 16 und dem Ankupplungsschaft 22 des Behandlungskopfs 20 herstellt oder verstärkt.

In Fig. 1 erkennt man, daß die elektromotorische Antriebseinheit 12 ggf. mit nicht dargestellter Drehzahlregelung und die Kupplungsbaugruppe in einem Gehäuseteil 28 aufgenommen sind, das sich in Achsrichtung der Ausgangs-welle 16 bis nahe an die Verbindungsstelle zwischen dem behandlungsaktiven Teil des Behandlungskopfes 20 und dem Ankupplungsschaft 22 erstreckt. Dabei ist der Gehäuseteil 28 im wesentlichen zylindrisch ausgebildet und verjüngt sich im behandlungskopfnahen Bereich. Um eine exakte Führung der Kupplungsbaugruppe 18 und damit des Behandlungskopfes 20 auch bei gestreckter Bauform zu gewährleisten, ist die Kupplungsbaugruppe 18 auf der antriebsnahen Seite vorzugsweise über ein Kugellager 30 am Gehäuseteil 28 abgestützt. Es wäre auch denkbar, das Kugellager 30 auf der behandlungskopfnahen Seite der Kupplungsbaugruppe 18 vorzusehen oder im Falle einer Kompaktversion oder einer entsprechend biegesteifen Kupplung ohne Kugellager auszukommen.

Wie man in Fig. 2 sieht, umfaßt die Kupplungsbaugruppe 18 zwei Basisteile 32 und 34, die in einer zur Achse der Ausgangswelle 16 im wesentlichen orthogonalen Trennebene E zusammenstoßen und miteinander verbunden sind. Im Bereich dieser Trennebene E ist in dem antriebsnahen Basisteil 32 eine Ausnehmung 36 für die Aufnahme der Primärkupplungsmittel 24 und der Sekundärkupplungsmittel 26 vorgesehen, wobei die Ausnehmung 36 durch das antriebsferne Basisteil 34 verschlossen ist. Dabei umgreift das antriebsferne Basisteil 34 mit seinem antriebsnahen Randbereich 38 das antriebsnahe Basisteil 32 und ist mit diesem durch geeignete Maßnahmen, wie z.B. durch Verschweißen oder Verkleben, verbunden. Gemäß Fig. 2 ist das Primärkupplungsmittel 24 von einem O-Ring 40 gebildet und das Sekundärkupplungsmittel 26 von drei Zylinderrollen 42, welche um den Ankupplungsschaft 22 herum angeordnet sind, wobei zwei Zylinderrollen 42 jeweils einen Winkelabstand W von 120° haben. Die Zylinderrollen 42 sind am Ankupplungsschaft 22 des Behandlungskopfs 20 und gleichzeitig an den jeweiligen Klemmbahnen 44 der Klemmstützfläche 46 geführt und liegen zwischen einer Schulterfläche 35 des antriebsnahen Basisteils 32 und einem Flanschteil 33 des antriebsfernen Basisteils 34, wobei die Klemmbahnen 44 einen vom Kreisverlauf K abweichenden Umfangsverlauf besitzen. Der Umfangsverlauf ist dabei derart ausgebildet, daß sich die Klemmbahn 44 von einem Punkt T aus in Umfangsrichtung mit zunehmender Steigung bis zu einem Punkt H erstreckt, wobei die Steigung derart ausgelegt ist, daß der beim Anlegen eines Bremsmoments eintretende Drehmomentschluß im wesentlichen selbsthemmungsfrei ist.

Da die Klemmbahnen 44 vom Punkt T aus sowohl im Uhrzeigersinn als auch gegen den Uhrzeigersinn gleich aufgebaut sind, kann die Kupplungsbaugruppe 18 für elektromotorische Antriebseinheiten mit Rechts- und Linkslauf verwendet werden. Um die Ordnung der Zylinderrollen 42 in jeder Situation aufrecht zu erhalten, sind die Zylinderrollen 42 in Taschen 48 eines käfigartig ausgebildeten Klemmkörperträgers 50 aufgenommen. Der Klemmkörperträger 50 weist einen Aufnahmekanal 52 auf, der zur Aufnahme des Ankupplungsschafts 22 dient und im antriebsnahen Endbereich eine Ausnehmung 54 zur Aufnahme des O-Rings 40 aufweist. Dabei ist die Ausnehmung 54 derart ausgelegt, daß ein O-Ring 40, der in der Ausnehmung 54 des Klemmkörperträgers 50 gelagert ist, mit seinem Innenumfang in den Aufnahmekanal 52 hineinragt, wodurch - bei durch den Aufnahmekanal 52 geschobenem Ankupplungsschaft 22 - eine ständige reibschlüssige Verbindung zwischen der Ausgangswelle 16 der elektromotorischen Antriebseinheit 12 und dem Ankupplungsschaft 22 besteht. Dabei ist das durch den O-Ring 40 zwischen dem Ankupplungsschaft 22 und der Ausgangswelle 16 übertragbare Drehmoment kleiner als das von der elektromotorischen Antriebseinheit 12 bei Abbremsung der Ausgangswelle 16 auf Stillstand abgegebene Antriebsmoment.

Der Klemmkörperträger 50 ist mit seinem antriebsnahen Ende 56 in einer Lagerausnehmung 58 des antriebsnahen Basisteils 32 aufgenommen, welche sich von der Ausnehmung 36 in axialer Richtung auf die Antriebseinheit 12 zu erstreckt. Dabei liegt eine Gleitfläche 60 gleitend an der Innenumfangsfläche der Lagerausnehmung 58 an, was ein im wesentlichen reibungsfreies Drehen des Klemmkörperträgers 50 relativ zu dem Basisteil 32 erlaubt. In axialer Richtung stützt sich der Klemmkörperträger 50 mit einem Endanschlag 62 an der Stützfläche 64 der Lagerausnehmung 58 ab, wohingegen der Klemmkörperträger 50 an seinem antriebsfernen Endbereich 66 mit einem Endanschlag 68 zur Anlage an der Stützfläche 70 des antriebsfernen Basisteils 34 ausgebildet ist. Wie man in Fig. 2 erkennt, ist der Klemmkörperträger 50 im wesentlichen in radialer Richtung spielfrei in der Lagerausnehmung 58 aufgenommen, wohingegen sich zwischen dem Endanschlag 68 und der Stützfläche 70 ein Spalt 72 befindet, welcher sicherstellt, daß zwischen dem Klemmkörperträger 50 bzw. den Zylinderrollen 42 und dem jeweiligen Basisteil 32 bzw. 34 kein Fressen stattfindet.

Um das Einführen des Ankupplungsschafts 22 des Behandlungskopfs 20 in die Kupplungsbaugruppe 18 zu erleichtern, ist der Ankupplungsschaft 22 in seinem Endbereich mit einer Fase 74 versehen und die Einlauföffnung 76 des antriebsfernen Basisteils 34 weist einen Einlaufkonus 78 auf. Zusätzlich sind die Zylinderrollen 42 in ihrem antriebsfernen Endbereich jeweils mit einer Fase 80 versehen, die derart bemessen sind, daß der Ankupplungsschaft 22 auch unter ungünstigsten Verhältnissen leicht durch den Aufnahmekanal 52 des Klemmkörperträgers 50 in den Zentralkanal 82 des antriebsnahen Basisteils 32 eingeführt werden kann. Zusätzlich ist der Zentralkanal 82 mit einem Endanschlag 86 versehen, der einen definierten Einschub des Ankupplungsschafts 22 sicherstellt. An den Endanschlag 86 des Zentralkanals 82 schließt sich eine Aufnahmeausnehmung 88 zur drehstarren Aufnahme der Ausgangswelle 16 der elektromotorischen Antriebseinheit 12 an. Je nach Ausführung der Ausgangswelle 16 kann die Aufnahmeausnehmung 88 als Bohrung oder mit Polygonprofil ausgebildet sein. An der Außenumfangsfläche des antriebsnahen Basisteils 32 ist eine Lagerfläche 90 ausgebildet, welche dem Kugellager 30 als Sitz dient.

Bei Verwendung des kosmetischen Schleifgeräts 10 wird der gewünschte Behandlungskopf 20 mit seinem Ankupplungsschaft 22 in die Einlauföffnung 76 des Basisteils 34 in den Zentralkanal 84, den Aufnahmekanal 52 und den daran anschließenden Zentralkanal 82 eingeschoben bis eine gewünschte Relativlage des Behandlungskopfs 20 bezüglich des Gehäuseteils 28 erreicht ist, ggf. bis die Fase 74 des Ankupplungsschafts 22 an den Endanschlag 86 anliegt. Während des Einschiebens des Ankupplungsschafts 22 werden die Zylinderrollen 42 von der Fase 74 erfaßt und ggf. radial nach außen gedrängt bis sie an der jeweiligen Klemmbahn 44 der Klemmstützfläche 46 zum Liegen kommen. Der O-Ring 40, der im unbelasteten Zustand in den Aufnahmekanal 52 des Klemmkörperträgers 50 hineinragt, wird ebenfalls nach radial außen gedrängt. Dabei wird der O-Ring 40 in die Ausnehmung 54 gepreßt, wobei sich der O-Ring 40 ggf. axial verformt und an der Stützfläche 64 des antriebsnahen Basisteils 32 zum Liegen kommt. Bei entsprechender Anpassung des O-Rings 40 kann es zu einem Abheben des Klemmkörperträgers 50 von der Stützfläche 64 kommen, wobei dann der Klemmkörperträger 50 mit seinem antriebsfernen Endanschlag 68 an der Stützfläche 70 zum Liegen kommt. Befindet sich der Ankupplungsschaft 22 und damit der Behandlungskopf 20 in einer gewünschten Position, ist über den O-Ring 40 zwischen der Ausgangswelle 16 und dem Ankupplungsschaft 22 eine ständige reibschlüssige Verbindung hergestellt. Somit stehen die Zylinderrollen 42 in reibschlüssiger Drehmitnahmeverbindung mit dem Ankupplungsschaft 22, wobei die reibschlüssige Drehmitnahmeverbindung zwischen den Zylinderrollen 42 und dem Ankupplungsschaft 22 wenigstens teilweise von dem O-Ring 40 gebildet ist.

Wird nun die elektromotorische Antriebseinheit 12 in Lauf gesetzt, so werden über die Ausgangswelle 16 die Basisteile 32 und 34 in Drehbewegung versetzt. Der Behandlungskopf 20, der über den Ankupplungsschaft 22 und den O-Ring 40 mit dem Klemmkörperträger 50 und den Zylinderrollen 42 reibschlüssig verbunden ist, bleibt im ersten Moment nach dem Drehbeginn der Basisteile 32 und 34 infolge seines Trägheitsmoments im Stillstand. Dadurch kommt es zu einer Relativverdrehung zwischen dem Basisteil 32, welcher die Klemmstützfläche 46 samt Klemmbahnen 44 umschließt, einerseits, und den Zylinderrollen 42 samt Klemmkörperträger 50, O-Ring 40, Ankupplungsschaft 22 und Behandlungskopf 20 andererseits. Infolge der Relativverdrehung zwischen den Zylinderrollen 42 und den Klemmbahnen 44 kommt es zu einem "Ansteigen" der Zylinderrollen 42 auf den jeweiligen Klemmbahnen 44. Dies bewirkt, daß der Abstand zwischen dem Ankupplungsschaft 22 und der Klemmstützfläche 46 verkürzt wird, was zu einem Andrücken der Zylinderrollen 42 sowohl an den jeweiligen Klemmbahnen 44 als auch am Ankupplungsschaft 22, und damit zu einem Einkuppeln des Sekundärkupplungsmittels 26 führt. Hat die elektromotorische Antriebseinheit 12 die über den nicht dargestellten Drehzahlregler voreingestellte Drehzahl erreicht, und liegt kein Bremsmoment am Behandlungskopf 20 an, so kehren die Zylinderrollen 42 samt Klemmkörperträger 50 und Ankupplungsschaft 22 möglicherweise wieder in den Bereich ihres Entkupplungszustands zurück, was durch die auf die Zylinderrollen 42 wirkenden Fliehkräfte und die auf Selbsthemmungsfreiheit abgestimmte Steigung erreicht wird. Sobald das zu übertragende Drehmoment am Ankupplungsschaft 22 wieder ansteigt, nämlich durch Anlegen des Behandlungskopfes 20 an eine Behandlungsstelle, kommt es infolge der ständigen reibschlüssigen Verbindung zwischen dem Ankupplungsschaft 22 und dem Klemmkörperträger 50 samt zugehöriger Zylinderrollen 42 wieder zu einer Relativverdrehung, wobei der Grad der Relativverdrehung abhängig ist vom übertragenen Drehmoment.

Vorzugsweise sind die Basisteile 32 und 34 sowie der Klemmkörperträger 50 aus Kunststoff gegossen oder höchstvorzugsweise gespritzt, wohingegen die Zylinderrollen 42 und der Ankupplungsschaft 22 vorzugsweise aus Stahl gefertigt sind.

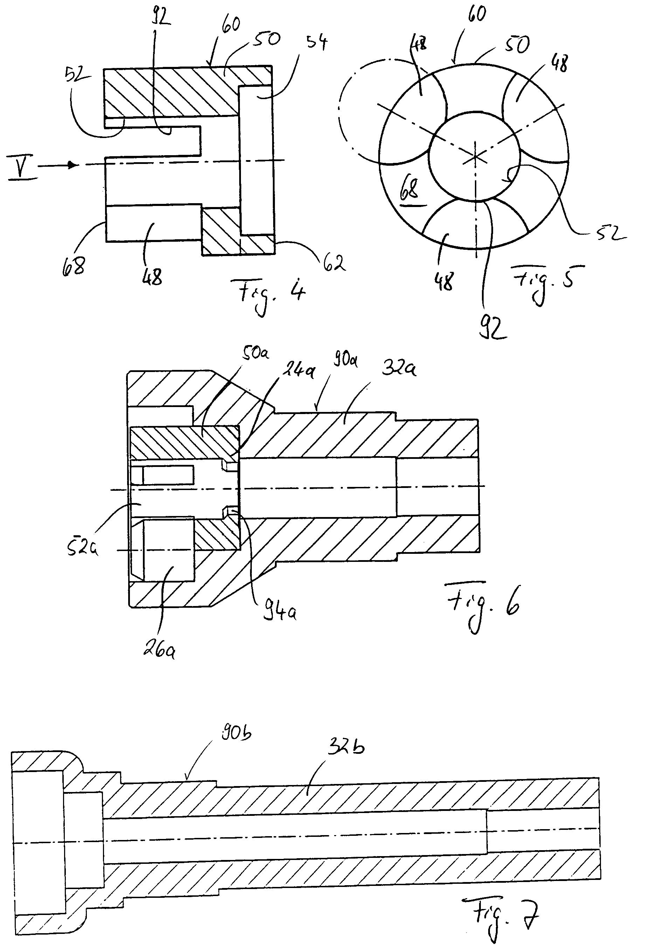

Wenn das Bremsmoment infolge schleifender Berührung des Behandlungskopfes 20 mit einer Behandlungsstelle nachläßt oder aufhört, so tritt infolge der immer noch bestehenden Zentrifugalkraft auf den Zylinderrollen 42 eine Rückkehr der Zylinderrollen 42 in den Bereich T der Fig. 3 ein, welcher der radial äußersten Lage der Zylinderrollen 42 entspricht. Wenn dann Stillstand der Ausgangswelle 16 eintritt, so ist infolge der Rückkehr der Zylinderrollen 42 in ihre radial äußerste Lage bei T eine vollständige Lösung des Sekundärkupplungsmittels 26 bereits eingetreten und der Ankupplungsschaft 22 kann unter Überwindung der allein verbleibenden Reibkraft durch den O-Ring 40 ausgezogen werden. Selbst wenn die Rückkehr der Zylinderrollen 42 in die radial äußerste Lage bei T nicht eingetreten sein sollte, so ist es relativ leicht, die Lösung der Sekundärkupplungsmittel 26 dadurch herbeizuführen, daß eine drehende, ggf. hin- und herdrehende, Bewegung des Behandlungskopfes 20 zwischen Daumen und Zeigefinger ausgeführt wird. Dieser Drehbewegung wirkt das Reibmoment der Ausgangswelle 16 in der Lagerung der elektromotorischen Antriebseinheit 12 entgegen und ferner die Trägheitsmomente des Rotors der Antriebseinheit 12 und der Kupplung, so daß es sehr rasch zu einer Lösung der Sekundärkupplungsmittel 26 kommt.

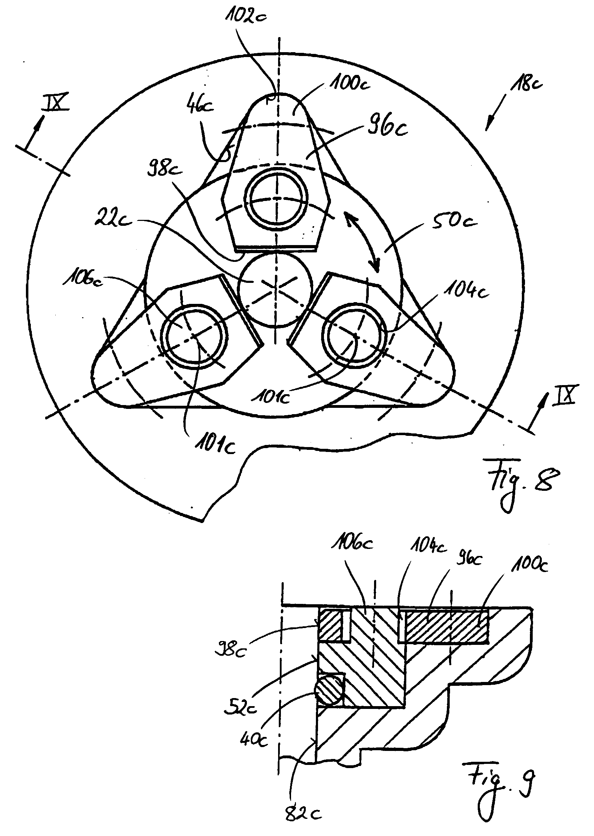

In den Fig. 4 und 5 erkehnt man den Klemmkörperträger 50 mit den um 120° versetzten Taschen 48. Die Taschen 48 sind dabei im wesentlichen kreisförmig ausgebildet und besitzen im Bereich des Aufnahmekanals 52 Durchbrüche 92, welche der Ankupplung der Zylinderrollen 42 an den Ankupplungsschaft 22 dienen.

In den Fig. 6 bis 9 sind weitere Ausführungsformen dargestellt, wobei dort analoge Teile mit den gleichen Bezugszeichen und zusätzlich jeweils mit dem Index a, b bzw. c versehen sind.

Die Ausführungsform gemäß Fig. 6 unterscheidet sich von der in Fig. 2 gezeigten Ausführungsform durch eine unterschiedliche Gestaltung der Primärkupplungsmittel 24a. Dabei weist der Klemmkörperträger 50a anstelle des O-Rings radiale Vorsprünge 94a auf, welche sich in den Aufnahmekanal 52a erstrecken und dazu dienen, einen primären Reibschluß zwischen einem eingesteckten Ankupplungsschaft und dem Klemmkörperträger 50a sicherzustellen.

In Fig. 7 ist ein antriebsnahes Basisteil 32b dargestellt, das sich von dem in Fig. 2 dargestellten Basisteil 32 dadurch unterscheidet, daß es eine wesentlich größere axiale Erstreckung aufweist, wodurch Behandlungsköpfe mit maximaler Schaftlänge mit ihrem jeweiligen behandlungsaktiven Teil bis an das der Antriebseinheit ferne Ende der Kupplungsbaugruppe eingesetzt werden können.

In den Fig. 8 und 9 ist eine weitere Ausführungsform der Kupplungsbaugruppe 18c dargestellt, die sich von der Ausführungsform gemäß Fig. 2 - 5 dadurch unterscheidet, daß anstelle der Zylinderrollen 42 Klemmkörper 96c vorgesehen sind, die dem Klemmkörperträger 50c um zur Achse der Ausgangswelle 16c bzw. des Ankupplungsschafts 22c parallele Schwenkachsen 101c schwenkbar gelagert sind, wobei die Klemmkörper 96c mit radial inneren Klemmschuhen 98c zur Anlage an dem Ankupplungsschaft 22c angeordnet sind und mit radial äußeren Steuerarmen 100c in Steuerausnehmungen 102c der Klemmkörperstützfläche 46c eingreifen. Die Klemmkörper 96c sind dabei mit Lagerbohrungen 104c versehen, die von den am Klemmkörperträger 50c in axialer Richtung vorstehenden Lagerzapfen 106c durchsetzt sind. Wie bei der Ausführungsform gemäß Fig. 2 - 5 weist- der Klemmkörperträger 50c einen O-Ring 40c auf, wobei der Innenumfang des O-Rings 40c in den Aufnahmekanal 52c hineinragt. Kommt es infolge der Drehung der Klemmkörper 96c um die Lagerzapfen 106c zu einem Anpressen der Klemmschuhe 98c an den Ankupplungsschaft 22c - was aufgrund der im Zusammenhang mit den zu Fig. 1 - 6 erläuterten trägheitsmoment- oder bremsmomentbedingten Relativverdrehungen zu erwarten ist - so tritt eine reibschlüssige Verbindung zwischen den Klemmschuhen 98c und dem Ankupplungsschaft 22c ein. Dabei ist das zwischen dem Ankupplungsschaft 22c und der Ausgangswelle 16c durch den O-Ring 40c übertragbare Drehmoment - wie in der Ausführungsform gemäß Fig. 2 bis 5 - wiederum kleiner als das von der elektromotorischen Antriebseinheit 12c bei Abbremsung der Ausgangswelle 16c auf Stillstand abgegebene Antriebsmoment, wohingegen der Reibschluß zwischen den Klemmschuhen 98c und dem Ankupplungsschaft 22c dem Antriebsmoment bei auf Stillstand abgebremster Ausgangswelle 16c standhält.

Um ein Durchrutschen der Klemmschuhe 98c auf dem Ankupplungsschaft 22c zu verhindern, können die Klemmkörper 96c mit einer reibungserhöhenden Beschichtung versehen sein. Die Anlageflächen der Klemmschuhe 98c müssen nicht wie in Fig. 8 dargestellt eine im wesentlichen gerade Anlagefläche besitzen, sondern können auch bogenförmig ausgebildet sein. Vorzugsweise sind sämtliche Teile der Kupplungsbaugruppe 18c aus Kunststoff geformt, insbesondere gespritzt oder gegossen.

In allen Ausführungsformen sind in beiden Basisteilen 32, 34 miteinander fluchtende Zentralkanäle 82, 84 für die Führung des Ankupplungsschafts 22 ausgebildet. Wichtig dabei ist auch, daß die Primärkupplungsmittel 24, zumindest aber die Sekundärkupplungsmittel 26 im eingekuppelten Zustand, zur Aufbringung einer axialen Stützkraft für den Ankupplungsschaft 22 ausgebildet sind, welche eine stabile Axialabstützung des Ankupplungsschafts 22 bei den im Betrieb zu erwartenden Axialkräften sicherstellt. Es ist somit z.B. möglich, das antriebsnahe Basisteil 32 ohne den Endanschlag 86 auszubilden, wenn der Ankupplungsschaft 22 den selben Außendurchmesser wie die Ausgangswelle 16 der elektromotorischen Antriebseinheit 12 besitzt. Anstelle der O-Ringe 40 bzw. der radialen Vorsprünge 94a können auch andere geeignete Primärkupplungsmittel 24 vorgesehen sein oder das Primärkupplungsmittel kann ggf. einstückig mit dem Sekundärkupplungsmittel ausgebildet sein, in welchem Fall eine ständige reibschlüssige Verbindung zwischen dem Ankupplungsschaft und dem Klemmkörper notwendig ist. Durch diese Anordnung wird eine unbeabsichtigte Trennung des Behandlungskopfes 20 von der Ausgangswelle 16 verhindert, wobei die Klemmkörper bei Anlegen eines Bremsmoments am Behandlungskopf 20 einen Drehmomentschlußzwischen der Ausgangswelle 16 und dem Ankupplungsschaft 22 des Behandlungskopfes 20 herstellen oder verstärken.

Es empfiehlt sich darauf zu achten, daß die Primärkupplungsmittel immer eine ausreichende axiale Stützkraft liefern, um bei völlig gelösten Sekundärkupplungsmitteln eine unbeabsichtigte axiale Verlagerung des Behandlungskopfes 20 zu vermeiden. Dies ist ohne weiteres möglich, da wegen der Funktionsbestimmung des Geräts mit großen Axialkräften ohnehin nicht zu rechnen ist.

Grundsätzlich ist das erfindungsgemäße Körperpflegegerät auch im dentalmedizinischen Bereich und zwar sowohl für dentalchirurgische Behandlungsgeräte als auch für Handstücke der Dentalmedizintechnik anwendbar. Bevorzugt kommt die Erfindung immer dann zur Anwendung, wenn mit genormten Durchmessern der Ankupplungsschäfte gerechnet werden kann.

## Patentansprüche

1. Rotationsbehandlungsgerät für Körperpflege, umfassend eine elektromotorische Antriebseinheit (12) mit einer Ausgangswelle (16) und einer an dieser Ausgangswelle (16) angeordneten Kupplungsbaugruppe (18) zum Ankuppeln eines Behandlungskopfes (20) mit einem im wesentlichen zylindrischen Ankupplungsschaft (22),
dadurch gekennzeichnet,
daß die Kupplungsbaugruppe (18) Primärkupplungsmittel (24) umfaßt, diese Primärkupplungsmittel (24) dazu bestimmt und geeignet, eine unbeabsichtigte Trennung des Behandlungskopfes (20) von der Ausgangswelle (16) zu verhindern, und
daß die Kupplungsbaugruppe (18) ferner Sekundärkupplungsmittel (26) umfaßt, welche bei Anlegen eines Bremsmoments an den Behandlungskopf (20) einen Drehmomentschluß zwischen der Ausgangswelle (16) und dem Ankupplungsschaft (22) des Behandlungskopfes (20) herstellen oder verstarken.

2. Rotationsbehandlungsgerät nach Anspruch 1,
dadurch gekennzeichnet,
daß ein Gehäuseteil (28) der elektromotorischen Antriebseinheit (12) in Achsrichtung der Ausgangswelle (16) zumindest über einen größeren Teil der axialen Erstreckung der Kupplungsbaugruppe (18) hinweg bis nahe an die Verbindungsstelle zwischen dem behandlungsaktiven Teil des Behandlungskopfes (20) und dem Ankupplungsschaft (22) des Behandlungskopfes (20) vorgezogen ist.

3. Rotationsbehandlungsgerät nach einem der Ansprüche 1 und 2,
dadurch gekennzeichnet,
daß die Kupplungsbaugruppe (18) in dem Gehäuseteil (28) durch ein Stützlager (30) gelagert ist.

4. Rotationsbehandlungsgerät nach einem der Ansprüche 1 - 3,
dadurch gekennzeichnet,
daß die Primärkupplungsmittel (24) eine ständige reibschlüssige Verbindung zwischen der Ausgangswelle (16) und dem Ankupplungsschaft (22) herstellen.

5. Rotationsbehandlungsgerät nach einem der Ansprüche 1 - 4,
dadurch gekennzeichnet,
daß das durch die Primärkupplungsmittel (24) zwischen dem Ankupplungsschaft (22) und der Ausgangswelle (16) übertragbare Drehmoment kleiner ist als das von der elektromotorischen Antriebseinheit (12) bei Abbremsung der Ausgangswelle (16) auf Stillstand abgegebene Antriebsmoment.

6. Rotationsbehandlungsgerät nach einem der Ansprüche 1 - 5,
dadurch gekennzeichnet,
daß die Sekundärkupplungsmittel (26) Klemmkörper (42) zwischen der Außenumfangsfläche des Ankupplungsschafts (22) und einer den Ankupplungsschaft (22) umschließenden, mit der Ausgangswelle (16) drehfestverbundenen Klemmkörperstützfläche (46) umfassen, wobei diese Klemmkörper (42) durch Relativverdrehung zwischen dem Ankupplungsschaft (22) und der Klemmkörperstützfläche (46) von mindestens einem Kupplungszustand in einen Entkupplungszustand umstellbar sind.

7. Rotationsbehandlungsgerät nach Anspruch 6,
dadurch gekennzeichnet,
daß die Klemmkörper (42) in reibschlüssiger Drehmitnahmeverbindung mit dem Ankupplungsschaft (22) stehen.

8. Rotationsbehandlungsgerät nach Anspruch 7,
dadurch gekennzeichnet,
daß die reibschlüssige Drehmitnahmeverbindung zwischen den Klemmkörpern (42) und dem Ankupplungsschaft (22) von einem Teil der Primärkupplungsmittel (24) gebildet ist.

9. Rotationsbehandlungsgerät nach Anspruch 8,
dadurch gekennzeichnet,
daß die reibschlüssige Drehmitnahmeverbindung von einem O-Ring (40) gebildet ist.

10. Rotationsbehandlungsgerät nach einem der Ansprüche 7 - 9,
dadurch gekennzeichnet,
daß die Klemmkörper (42) an einem Klemmkörperträger (50) angeordnet sind.

11. Rotationsbehandlungsgerät nach Anspruch 10,
dadurch gekennzeichnet,
daß der Klemmkörperträger (50) in reibschlüssiger Drehmitnahmeverbindung mit dem Ankupplungsschaft (22) steht.

12. Rotationsbehandlungsgerät nach Anspruch 11,
dadurch gekennzeichnet,
daß an dem Klemmkörperträger (50a) reibschlüssige Drehmitnahmemittel (94a) befestigt oder angeformt sind, welche sich bei Einführen des Ankupplungsschafts (22) in das Rotationsbehandlungsgerät an den Ankupplungsschaft (22) anlegen.

13. Rotationsbehandlungsgerät nach Anspruch 11,
dadurch gekennzeichnet,
daß an dem Klemmkörperträger (50) Aufnahmemittel (58) für Drehmitnahmemittel, insbesondere ringförmige Drehmitnahmemittel wie O-Ringe, Toleranzringe oder dergleichen (40) vorgesehen sind, welche sich bei Einführen des Ankupplungsschafts (22) an diesen anlegen.

14. Rotationsbehandlungsgerät nach einem der Ansprüche 10 - 13,
dadurch gekennzeichnet,
daß der Klemmkörperträger (50) in einem mit der Ausgangswelle (16) drehfestverbundenen Basisteil (32, 34) der Kupplungsbaugruppe (18) drehbeweglich angeordnet ist, an welchem die den Ankupplungsschaft (22) umschließende Klemmkörperstützfläche (46) angeordnet ist und daß durch je einen Zentralkanal (82, 84; 52) des Basisteils (32, 34) und des Klemmkörperträgers (50) ein Aufnahmekanal für den Ankupplungsschaft (22) gebildet ist.

15. Rotationsbehandlungsgerät nach einem der Ansprüche 9 - 14,
dadurch gekennzeichnet,
daß ein O-Ring (40) an dem Klemmkörperträger (50) gelagert ist, wobei der Innenumfang des O-Rings (40) in den Aufnahmekanal (52) hineinragt.

16. Rotationsbehandlungsgerät nach einem der Ansprüche 7 - 15,
dadurch gekennzeichnet,
daß die Klemmkörper (42) in Taschen (48) eines käfigartig ausgebildeten Klemmkörperträgers (50) aufgenommen sind und an Klemmbahnen (44) der Klemmkörperstützfläche (46) anliegen, welche einen vom Kreisverlauf (K) abweichenden Umfangsverlauf, im folgenden genannt: Klemmsteigung, besitzen.

17. Rotationsbehandlungsgerät nach einem der Ansprüche 7 - 16,
dadurch gekennzeichnet,
daß die Klemmkörper (42) als Kugeln oder Zylinderrollen (42) ausgebildet sind.

18. Rotationsbehandlungsgerät nach einem der Ansprüche 7 - 16,
dadurch gekennzeichnet,
daß die Klemmkörper (96c) auf dem Klemmkörperträger (50c) um zur Achse der Ausgangswelle parallele Schwenkachsen (101c) schwenkbar gelagert sind, mit radial inneren Klemmschuhen (98c) zur Anlage an dem Ankupplungsschaft (22c) angeordnet sind und mit radial äußeren Steuerarmen (100c) in Steuerausnehmungen (102c) der Klemmkörperstützfläche (46c) eingreifen.

19. Rotationsbehandlungsgerät nach einem der Ansprüche 1 - 18,
dadurch gekennzeichnet,
daß mindestens ein Teil der Komponenten der Kupplungsbaugruppe (18; 18c) aus Kunststoff gegossen oder vorzugsweise gespritzt sind.

20. Rotationsbehandlungsgerät nach Anspruch 19,
dadurch gekennzeichnet,
daß mit Ausnahme der vorzugsweise aus Stahl gefertigten Klemmkörper (42) sämtliche Teile der Kupplungsbaugruppe (18) aus Kunststoff geformt, insbesondere gespritzt oder gegossen sind.

21. Rotationsbehandlungsgerät nach einem der Ansprüche 1 - 20,
dadurch gekennzeichnet,
daß die Kupplungsbaugruppe (18) aus zwei Basisteilen (32, 34) zusammengesetzt ist, welche in einer zur Achse der Ausgangswelle (16) im wesentlichen orthogonalen Trennebene (E) zusammenstoßen und miteinander verbunden sind, und daß im Bereich dieser Trennebene (E) in mindestens einem der Basisteile (32) Ausnehmungen (36; 58) für die Aufnahme der Primärkupplungsmittel (24) und der Sekundärkupplungsmittel (26) vorgesehen sind, welche durch den jeweils anderen der beiden Basisteile (34) verschlossen sind.

22. Rotationsbehandlungsgerät nach Anspruch 21,
dadurch gekennzeichnet,
daß die Primärkupplungsmittel (24) und Sekundärkupplungsmittel (26) in dem der elektromotorischen Antriebseinheit (12) axial näheren Basisteil (32) angeordnet sind.

23. Rotationsbehandlungsgerät nach einem der Ansprüche 21 und 22,
dadurch gekennzeichnet,
daß in beiden Basisteilen (32, 34) miteinander fluchtende Zentralkanäle (82, 84) für die Führung des Ankupplungsschafts (22) ausgebildet sind.

24. Rotationsbehandlungsgerät nach einem der Ansprüche 1 - 23,
dadurch gekennzeichnet,
daß die Primärkupplungsmittel (24) oder/und die Sekundärkupplungsmittel (26) zur Aufbringung einer axialen Stützkraft für den Ankupplungsschaft (22) ausgebildet sind, welche eine formschlüssige Axialabstützung des Ankupplungsschafts (22) verzichtbar macht.

25. Rotationsbehandlungsgerät nach einem der Ansprüche 1 - 24,
dadurch gekennzeichnet,
daß die Kupplungsbaugruppe derart bemessen ist, daß Behandlungsköpfe (20) maximaler Schaftlänge mit ihrem jeweiligen behandlungsaktiven Teil (20) bis an das der Antriebseinheit ferne Ende der Kupplungsbaugruppe eingesetzt werden können.

26. Rotationsbehandlungsgerät nach einem der Ansprüche 1 - 25,
dadurch gekennzeichnet,
daß die elektromotorische Antriebseinheit (12) für Rechtslauf und Linkslauf ausgebildet ist.

27. Rotationsbehandlungsgerät nach einem der Ansprüche 1 - 26,
dadurch gekennzeichnet,
daß die Sekundärkupplungsmittel (26) derart ausgebildet sind, daß der bei Anlegen eines Bremsmoments eintretende Drehmomentschluß im wesentlichen selbsthemmungsfrei ist.

28. Rotationsbehandlungsgerät nach einem der Ansprüche 1 - 27,
dadurch gekennzeichnet,
daß die Kupplungsbaugruppe (18; 18c) zur Aufnahme von Ankupplungsschäften (22, 22c) ausgebildet ist, welche den Normen der dentalmedizinischen Technik entsprechen.

29. Rotationsbehandlungsgerät nach einem der Ansprüche 6 - 28,
dadurch gekennzeichnet,
daß die Klemmkörper (42) an ihren Anlageflächen zur Anlage an dem Ankupplungsschaft (22) und/oder an der Klemmkörperstützfläche (46) und/oder die Außenumfangsfläche des Ankupplungsschafts (22) und/oder die Klemmkörperstützfläche (46) derart gerauht sind, daß eine Erhöhung des durch die Sekundärkupplungsmittel (26) übertragbaren Drehmoments eintritt.

30. Rotationsbehandlungsgerät nach einem der Ansprüche 6 - 29,
dadurch gekennzeichnet,
daß die Sekundärkupplungsmittel (26) derart ausgebildet sind, daß nach Eintritt einer Klemmung, soweit sich diese Klemmung bei Aufhören einer Drehmomentübertragung nicht von selber löst, diese Klemmung jedenfalls dadurch lösbar ist, daß an den Behandlungskopf von Hand ein beschleunigendes Drehmoment ggf. mehrfach und mit wechselnder Drehrichtung angelegt wird.

31. Die Kupplungsbaugruppe nach einem der Ansprüche 1 - 30, insbesondere zur Verwendung bei einem Rotationsbehandlungsgerät (10) für Körperpflege.
